# EUROPEAN PATENT APPLICATION

(11) **EP 4 395 243 A1**
(43) Date of publication of application: **03.07.2024**
(21) Application number: 22897045.5
(22) Date of filing: 28.04.2022
(51) Int. Cl.: H04L 12/28, H04L 12/12

(54) **COMMUNICATION METHOD, NODE, DEVICE, COMMUNICATION SYSTEM, AND STORAGE MEDIUM**

(30) Priority: 25.11.2021 CN 202111413160
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Iannone, Carlo Luigi
(86) International application number: PCT/CN2022/090053
(87) International publication number: WO 2023/092945

(57) **Abstract**

A communication method, a node, a device, a communication system, and a storage medium. The method includes: determining (110) a target device according to a trigger message from a first node; sending (120) a visit message to the target device, where the visit message is used for instructing the target device to perform a corresponding operation; and sending (130) execution result information of the target device to the first node.

## Description

### CROSS-REFERENCE TO RELATED APPLICATION(S)

This application claims priority to Chinese Patent Application No. 202111413160.5 filed Nov. 25, 2021, the disclosure of which is incorporated herein by reference in its entirety.

### TECHNICAL FIELD

The present application relates to the technical field of wireless communication networks, for example, a communication method, a node, a device, a communication system, and a storage medium.

### BACKGROUND

In recent years, the application of Internet of things technology on a large scale has resulted in a richer market and a richer technical demand. New Internet of things applications continuously emerge, and in the future, a larger number of sensors, Internet of things devices, or modules of other types will penetrate into a variety of traditional or emerging industries such as agriculture, industry, environmental protection, urban management, and human health. For example, all books in a smart library may be equipped with electronic tags, the flow of books throughout the library is tracked all the time, and book searching and positioning, quantity or state statistics, and the like are likely to be completed in real time. For another example, the warehousing and logistics industry may have a high degree of automation now, and administrators can implement electronic item recording, querying, and tracking by using radio-frequency identification (RFID)-based tags. However, the tags need to be read in sequence with a dedicated device, which requires a very huge amount of work.

Taken together, such applications have proposed requirements with relatively large differences from those of existing Internet of things applications. For example, the number of such devices is very huge, and many devices are very small in size, require an extremely simple hardware structure, and even fail to be integrated with batteries. Additionally, even if such devices can be integrated with the batteries, one battery may be difficult to maintain for an extremely long time due to very diverse service modes. Due to the number of such devices being very huge, it is very difficult to charge these devices or replace the batteries for these devices, which requires great labor and material resources and even is impossible to complete. Thus, it can be seen that the deployment of the Internet of things on a large scale is limited by the energy consumption, deployment, and maintenance costs of sensors.

### SUMMARY

The present application provides a communication method, a node, a device, a communication system, and a storage medium.

An embodiment of the present application provides a communication method. The method includes: determining a target device according to a trigger message from a first node; sending a visit message to the target device, where the visit message is used for instructing the target device to perform a corresponding operation; and sending execution result information of the target device to the first node.

An embodiment of the present application further provides a communication method. The method includes: sending a trigger message for instructing a second node to determine a target device; and receiving execution result information of the target device.

An embodiment of the present application further provides a communication method. The method includes: receiving a visit message from a second node, and performing a corresponding operation according to the visit message; and sending execution result information to the second node.

An embodiment of the present application further provides a node. The node includes a memory, a processor, and a computer program stored in the memory and executable by the processor, where the processor executes the computer program to perform the preceding communication method. An embodiment of the present application further provides a device. The device includes a memory, a processor, and a computer program stored in the memory and executable by the processor, where the processor executes the computer program to perform the preceding communication method. An embodiment of the present application further provides a computer-readable storage medium. The computer-readable storage medium is configured to store a computer program which, when executed by a processor, causes the processor to perform the preceding communication method.

### BRIEF DESCRIPTION OF DRAWINGS

FIG. 1 is a schematic diagram of a cellular network according to an embodiment.
FIG. 2 is a schematic diagram of another cellular network according to an embodiment.
FIG. 3 is a schematic diagram of an architecture of a control plane of a cellular network according to an embodiment.
FIG. 4 is a schematic diagram of another architecture of a control plane of a cellular network according to an embodiment.
FIG. 5 is a schematic diagram of another architecture of a control plane of a cellular network according to an embodiment.
FIG. 6 is a flowchart of a communication method according to an embodiment.
FIG. 7 is a schematic diagram of a communication process between a device and nodes according to an embodiment.
FIG. 8 is a schematic diagram of another communication process between a device and nodes according to an embodiment.
FIG. 9 is a schematic diagram of another communication process between a device and a node according to an embodiment.
FIG. 10 is a schematic diagram of another communication process between a device and a node according to an embodiment.
FIG. 11 is a schematic diagram of a communication process between a second node and a third node according to an embodiment.
FIG. 12 is a schematic diagram of another communication process between a device and nodes according to an embodiment.
FIG. 13 is a flowchart of another communication method according to an embodiment.
FIG. 14 is a flowchart of another communication method according to an embodiment.
FIG. 15 is a schematic diagram of state switching of a device according to an embodiment.
FIG. 16 is a structural diagram of a communication apparatus according to an embodiment.
FIG. 17 is a structural diagram of another communication apparatus according to an embodiment.
FIG. 18 is a structural diagram of another communication apparatus according to an embodiment.
FIG. 19 is a structural diagram of hardware of a node according to an embodiment.
FIG. 20 is a structural diagram of hardware of a device according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

In the Internet of things technology, tags of devices may be read in sequence with a dedicated device, the number of devices is generally very large, and the reading of the tags requires a very large amount of work. Additionally, many devices are very small in size, have a relatively simple hardware structure, and even fail to be integrated with batteries. Moreover, a battery is difficult to maintain for an extremely long time due to very diverse service modes and is relatively difficult to replace or charge. Thus, it can be seen that the deployment of the Internet of things on a large scale is limited by the energy consumption, deployment, and maintenance costs of sensors.

A communication method in this embodiment may be implemented based on a cellular network. The communication method relates to a first node (such as a core network or a data processing platform), a second node (such as a base station or an access point), and a device with a tag (such as a tag or a terminal, which are collectively referred to as a device hereinafter). In some embodiments, the communication method also relates to a third node (such as a passive device, a reader-writer, or a relay device based on radio frequency technology).

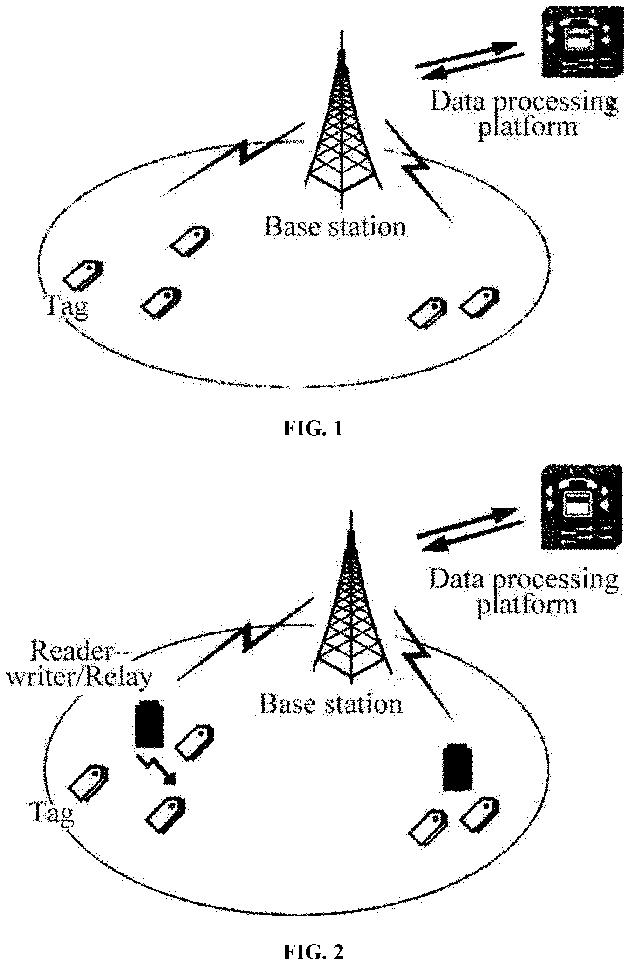

FIG. 1 is a schematic diagram of a cellular network according to an embodiment. As shown in FIG. 1, in the cellular network, the tag or the terminal is controlled and managed by the base station. The tag or the terminal may acquire energy and signals from the base station, and the base station may manage the tag or the terminal according to an instruction from the data processing platform or the core network.

FIG. 2 is a schematic diagram of another cellular network according to an embodiment. As shown in FIG. 2, considering that some tags or terminals have relatively low receiving sensitivity and require relatively high received signal quality, a coverage range of a downlink signal required by the tags or terminals is smaller than an actual coverage range of the base station. Considering the coverage range, the third node such as the reader-writer or the relay device (Relay) may be deployed under the base station. The base station delivers an instruction to the reader-writer or the Relay, and the reader-writer or the Relay excites or sends a message to the tag or the terminal. After receiving an uplink command sent by the tag or the terminal, the reader-writer or the Relay forwards the uplink command to the base station.

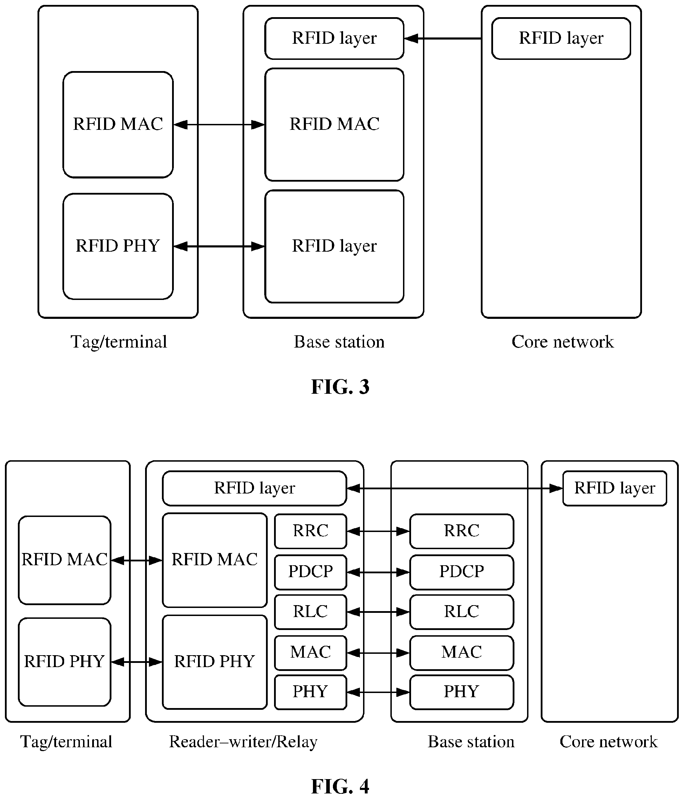

FIG. 3 is a schematic diagram of an architecture of a control plane of a cellular network according to an embodiment. The architecture of a control plane of the cellular network shown in FIG. 1 is as shown in FIG. 3, where an RFID media access control (MAC) layer of the tag or the terminal may perform signaling or data transmissions with an RFID MAC layer of the base station, an RFID physical (PHY) layer of the tag or the terminal may perform signaling or data transmissions with an RFID PHY layer of the base station, and an RFID layer of the base station may perform signaling or data transmissions with an RFID layer of the core network.

FIG. 4 is a schematic diagram of another architecture of a control plane of a cellular network according to an embodiment. The architecture of a control plane of the cellular network shown in FIG. 2 is as shown in FIG. 4. The base station has no RFID layer and may be unable to identify information related to an RFID or the passive device, where the information of the RFID or the passive device is an application layer data packet, and the base station does not parse the data packet. The reader-writer or the Relay not only has an RFID function, such as MAC, PHY, and RFID layers supporting the RFID function, but also has functions related to a Uu interface, such as radio resource control (RRC), Packet Data Convergence Protocol (PDCP), Radio Link Control (RLC), MAC, and PHY layers supporting the functions related to the Uu interface.

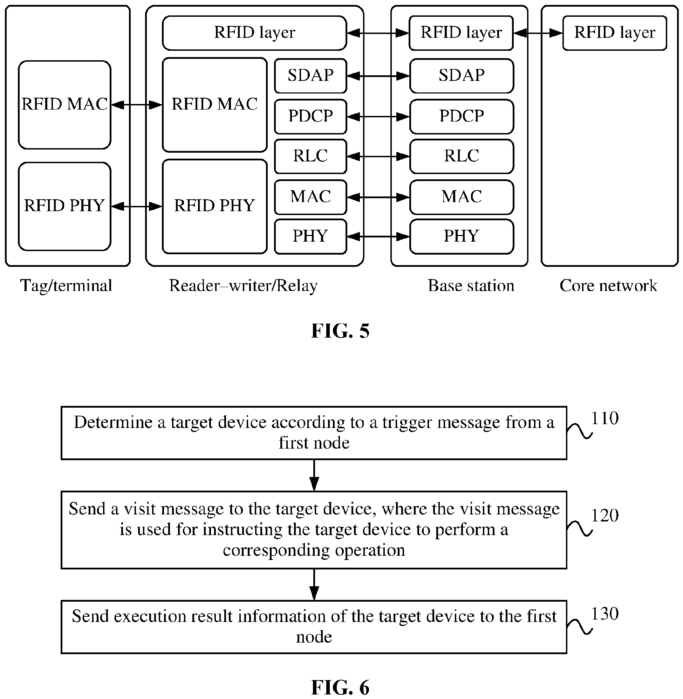

FIG. 5 is a schematic diagram of another architecture of a control plane of a cellular network according to an embodiment. The architecture of the control plane of the cellular network shown in FIG. 2 is as shown in FIG. 5. The base station may have the RFID layer and may parse a data packet related to the RFID or the passive device, identify the information related to the RFID or the passive device, and instruct the reader-writer or the Relay to determine and visit the tag or the terminal. On this basis, the reader-writer or the Relay also has a function of a Service Data Adaptation Protocol (SDAP) layer.

Multiple connections may be set up between the reader-writer/Relay and the base station, each connection corresponds to or is associated with one or more tags or terminals, and data related to the associated tags or terminals may be transmitted through each connection. One connection may be set up between the reader-writer/Relay and the base station, and data related to all tags or terminals supported or maintained by the reader-writer/Relay are transmitted through the connection. These connections may have dedicated configurations, where the base station provides a configuration for each connection; these connections may have a common configuration, where the base station provides one common configuration for these connections; or these connections may each have a default configuration.

Multiple connections may be set up between the core network and the base station, each connection corresponds to or is associated with one or more tags or terminals, and data related to the associated tags or terminals may be transmitted through each connection and/or data related to tags or terminals supported or maintained by the reader-writer/Relay may be transmitted through each connection. One connection may be set up between the core network and the base station, and data related to all tags or terminals supported or maintained by the base station are transmitted through the connection. These connections may have dedicated configurations, where the core network provides configurations for these connections; these connections may have a common configuration, where the core network provides one common configuration for these connections; or these connections may each have a default configuration.

FIG. 6 is a flowchart of a communication method according to an embodiment. The communication method may be applied by a second node (such as a base station). As shown in FIG. 6, the method according to the embodiment includes operations 110, 120 and 130.

In 110, a target device is determined according to a trigger message from a first node.

In 120, a visit message is sent to the target device, where the visit message is used for instructing the target device to perform a corresponding operation.

In 130, execution result information of the target device is sent to the first node.

In this embodiment, the first node (such as a core network) may send the trigger message to the second node to trigger an operation of searching devices in a network for the target device, so as to determine and visit the target device through the second node; the second node sends the visit message to instruct the target device to perform the corresponding operation, such as reading a tag, erasing a tag, or modifying a tag; and the target device may perform the corresponding operation accordingly and feed back the execution result information to the first node through the second node, thereby implementing radio-frequency identification of an RFID tag in a cellular network. In an embodiment, the trigger message includes at least one of the following information about at least one device: a complete identifier or a partial identifier of the device; all or part of data stored in the device; a change instruction for a selected flag or an inventory flag; a selection message of the device; capability information of the device; auxiliary information of the device; an operation type; operation content; a password; an operation message; a connection request; resource information for transmitting data; connection information; or bearer information.

In an embodiment, after the target device is determined according to the trigger message from the first node, operation 112 is further included: information about the target device is sent to the first node; where the information about the target device includes at least one of: a complete identifier or a partial identifier of the target device; all or part of data stored in the target device; a random code corresponding to the target device; an instruction of an access result of the target device; capability information of the target device; auxiliary information of the target device; a feedback message of the target device; a connection request for the target device; or resource information for transmitting data.

In an embodiment, before the visit message is sent to the target device, operation 114 is further included: a visit instruction message is received from the first node, where the visit instruction message is used for instructing an operation performed on the target device, and the visit instruction message includes at least one of the following information about the target device: the complete identifier or the partial identifier of the target device; the random code corresponding to the target device; the operation type; the operation content; the password; the operation message; the connection request for the target device; the resource information for transmitting data; the capability information of the target device; the auxiliary information of the target device; connection information of the target device; or bearer information of the target device.

In an embodiment, the execution result information includes at least one of: the complete identifier or the partial identifier of the target device; all or part of the data stored in the target device; the random code corresponding to the target device; the instruction of the access result of the target device; the auxiliary information of the target device; the feedback message of the target device; the operation type; an execution result; read content; the connection request for the target device; the resource information for transmitting data; or an application layer data packet.

In an embodiment, the target device is in one of the following states: an idle state in which the target device does not support a data transmission; an access state in which the target device supports an access operation and does not support a visit operation; a connected state in which the target device supports a visit operation; an inactive state in which the target device does not operate; or a silent state in which the target device enters a power saving mode.

In an embodiment, the operation of determining target device according to the trigger message from the first node includes operations 1110, 1120, and 1130. In 1110, a selection message and a query message are sent to at least one device according to the trigger message. In 1120, anti-collision information fed back by at least one device is received, and an acknowledgement message is sent to the at least one device that feeds back the anti-collision information. In 1130, report information is received, where the at least one device that feeds back the anti-collision information sends the report information according to the acknowledgement message, and the at least one device that sends the report information is determined to be the target device.

In an embodiment, before the visit message is sent to the target device, operation 116 and operation 118 are further included. In 116, a request message is sent to the target device, where the request message is used for instructing the target device to generate a random number. In 118, the random number returned by the target device is received.

In an embodiment, the visit message includes instruction information of at least one of a read operation; a write operation; an inactivation operation; a lock operation; a visit operation; a block write operation; or a block erase operation. The visit message may further include at least one of the resource information for transmitting data; or the capability information and the bearer information of the target device.

In an embodiment, before the visit message is sent to the target device, operation 1140, operation 1150, and operation 1160 are further included. In 1140, a third node is woken up according to a wake-up message from the first node. In 1150, a connection setup request is received from the third node, and a connection setup request is sent to the first node. In 1160, a connection is set up with the third node according to a connection instruction message from the first node.

In an embodiment, the wake-up message includes at least one of: an identifier of the third node; a type of the third node; a wake-up cause; capability information of the third node; auxiliary information of the third node; or an application layer data packet.

In an embodiment, the connection setup request includes at least one of: the identifier of the third node; the type of the third node; the wake-up cause; information about devices supported or stored by the third node; a resource for transmitting data; or an application layer data packet.

The communication method for the cellular network is described below through embodiments. It is to be noted that in the following embodiments, the first node is the core network, the second node is the base station, the device is a tag or a terminal, and the third node is a reader-writer or a Relay, for example.

### Embodiment one

The passive Internet of things based on the cellular network can well implement the functions of tracking, positioning, and counting mobile tags or terminals. The passive Internet of things based on the cellular network has three networking forms.
(1) The base station has functions of the reader-writer, for example, sending an excitation signal or a message to the tag or the terminal, receiving a message from the tag or the terminal, and identifying the tag or the terminal.
(2) The base station does not have the functions of the reader-writer and can control the reader-writer, for example, the base station sends a control command to the reader-writer and receives a message from the reader-writer.
(3) The base station has only part of the functions of the reader-writer, for example, receiving a message from the reader-writer.

In this embodiment, for ease of description, the second node and the third node may be considered as a whole (that is, the reader-writer/base station), signaling interaction between the reader-writer/base station and the tag/terminal and between the reader-writer/base station and an upper node (such as the core network) is mainly embodied, and interaction between the reader-writer and the base station is not embodied in this embodiment.

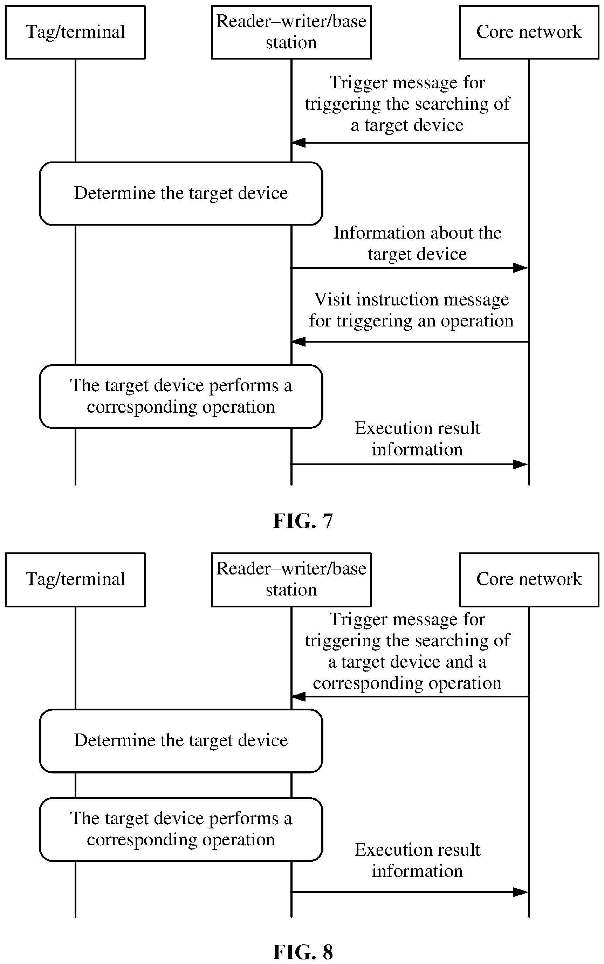

FIG. 7 is a schematic diagram of a communication process between a device and nodes according to an embodiment. As shown in FIG. 7, the communication process mainly includes the content below.
1. The core network sends a trigger message to the reader-writer or the base station via an interface (such as Xn or X2) to trigger the searching of the device, that is, the selection of some tags or terminals satisfying a condition. The trigger message may carry at least one of:
   - a complete identifier of the tag/terminal or part of the identifier of the tag/terminal, for example, a personal computer (PC) identifier, an Electronic Product Code (EPC), and/or a cyclic redundancy check (CRC) code such as CRC-16, or part of the PC, EPC, and/or CRC-16;
   - all data stored in a memory of the tag/terminal or part of the data, for example, a class identification code, also referred to as a tag identifier (TID), or part of the TID;
   - a change instruction for changing a selected flag or an inventory flag of the tag/terminal;
   - a selection message or another message, which may be encapsulated information for selecting the device;
   - capability information of the tag/terminal, for example, a function and a transmission manner supported by the tag/terminal, a type of the tag/terminal, a version of the tag/terminal, encryption information, and/or information about an inactive state of the tag; or
   - auxiliary information of the tag/terminal, for example, position information or a beam direction of a previous connection of the tag/terminal, a transmission manner used for the previous connection, a collision probability, and/or silence information.
      The trigger message may carry information about one tag/terminal or may carry information about multiple tags/terminals.
2. After receiving the trigger message, the reader-writer/base station sends the trigger message to the tag/terminal according to the information provided by the core network to determine a selected tag/terminal and identify the tag. After the tag/terminal receives the trigger message, if the tag/terminal satisfies a condition instructed in the message sent by the reader-writer/base station, the tag/terminal identifies the base station/reader-writer and responds by a feedback message. In this process, the base station/reader-writer and the tag/terminal identify and confirm each other.
3. After receiving feedback from the tag/terminal, the reader-writer/base station determines the selected tag/terminal (that is, a target device) and sends information about the target device to the node. The information about the target device may carry at least one of:
   - a complete identifier of the target device or part of the identifier, for example, PC, EPC, and/or CRC-16, or part of the PC, EPC, and/or CRC-16;
   - all data stored in a memory of the target device or part of the data, for example, a TID or part of the TID;
   - a random code generated by the target device, for example, RN16;
   - an instruction of whether the target device succeeds in an access (that is, an instruction of an access result);
   - capacity information of the target device;
   - auxiliary information of the target device, for example, whether a collision occurs and/or a collision probability;
   - a feedback message of the target device, which may be encapsulated information;
   - a connection request for requesting the setup of a connection between the base station/reader-writer and the node for the target device; or
   - a resource for the base station/reader-writer to receive data from the core network or send data to the core network, such as an Internet Protocol (IP) address and/or a General Packet Radio Service Tunneling Protocol user plane (GTPU) address (that is, resource information for transmitting data). The above information may be information about one target device or information about multiple target devices.
4. The core network sends a visit instruction message to the reader-writer/base station to instruct operations performed on the target device. The visit instruction message may carry at least one of:
   - the complete identifier of the target device or part of the identifier, for example, the PC, EPC, and/or CRC-16, or part of the PC, EPC, and/or CRC-16;
   - the random code generated by the target device, for example, RN16;
   - an operation type, for example, read, write, inactivation, lock, block write, and/or block erase;
   - operation content, for example, a storage region, a starting word address of the storage region, and the number for read, a storage region and a starting word address of the storage region for write, written content, a type of a lock operation, a storage region and a starting word address of the storage region for lock, locked content, a storage region, a starting word address of the storage region, and the number for erase, and/or erased content;
   - a password, for example, an access password;
   - an operation message, for example, a read message, a write message, an inactivation message, a lock message, a block write message, and/or a block erase message;
   - whether to accept the connection request between the base station/reader-writer and the node for the target device;
   - a resource for the core network to receive data from the base station/reader-writer or send data to the base station/reader-writer (that is, resource information for transmitting data), for example, an IP address and/or a GTPU address;
   - the capability information of the target device, for example, a function supported by the target device, a supported transmission manner, a type of the target device, a version of the target device, encryption information, and/or information about an inactive state of the tag;
   - the auxiliary information of the target device, for example, position information or a beam direction of a previous connection of the target device, a transmission manner used for the previous connection, the collision probability, and/or silence information;
   - connection information, for example, the number and identifiers of connections between the base station/reader-writer and the node and to be set up by the base station/reader-writer and a service requirement to be satisfied, such as a quality of service (QoS) index and/or a transmission rate; or
   - bearer information, for example, the number and identifiers of bearers with the tag/terminal and to be set up by the base station/reader-writer and a service requirement to be satisfied, such as a QoS index, a transmission rate, a transmission format, and/or an encryption manner.
      The above information may be information about one target device or information about multiple target devices.
5. After receiving the visit instruction message, the reader-writer/base station sends a visit message to the tag/terminal according to the information provided by the core network to inform the target device of an operation to be performed. After receiving the visit message, the target device performs a response operation according to the visit message and feeds back execution result information to the base station.
6. The reader-writer/base station may send the execution result information to the core network to instruct an execution result of the operation instructed in the visit message. The execution result information may carry at least one of:
   - the identifier of the target device, for example, the EPC;
   - the operation type: read, write, inactivation, lock, block write, and/or block erase;
   - an execution result: whether the operation succeeds or not;
   - read content included for the read operation; or
   - the auxiliary information of the target device, for example, the transmission manner used for the connection and/or the collision probability.

The above information may be information about one target device or information about multiple target devices.

### Embodiment two

In this embodiment, for ease of description, the second node and the third node may be considered as a whole (that is, the reader-writer/base station), signaling interaction between the reader-writer/base station and the tag/terminal and between the reader-writer/base station and an upper node (such as the core network) is mainly embodied, and interaction between the reader-writer and the base station is not embodied in this embodiment.

FIG. 8 is a schematic diagram of another communication process between a device and nodes according to an embodiment. As shown in FIG. 8, the communication process mainly includes the content below.
1. The core network sends a trigger message to the reader-writer or the base station via an interface (such as Xn or X2) to trigger the searching of the device, that is, the selection of some tags or terminals satisfying a condition. The trigger message may carry at least one of:
   - a complete identifier of the tag/terminal or part of the identifier of the tag/terminal, for example, PC, EPC, and/or CRC-16, or part of the PC, EPC, and/or CRC-16;
   - all data stored in a memory of the tag/terminal or part of the data, for example, a TID or part of the TID;
   - a change instruction for changing a selected flag or an inventory flag of the tag/terminal;
   - a selection message or another message, which may be encapsulated information for selecting the device;
   - an operation type, for example, read, write, inactivation, lock, block write, and/or block erase;
   - operation content, for example, a storage region, a starting word address of the storage region, and the number for read, a storage region and a starting word address of the storage region for write, written content, a type of a lock operation, a storage region and a starting word address of the storage region for lock, locked content, a storage region, a starting word address of the storage region, and the number for erase, and/or erased content;
   - a password, for example, an access password;
   - an operation message, for example, a read message, a write message, an inactivation message, a lock message, a block write message, and/or a block erase message;
   - capability information of the tag/terminal, for example, a function and a transmission manner supported by the tag/terminal, a type of the tag/terminal, a version of the tag/terminal, encryption information, and/or information about an inactive state of the tag;
   - auxiliary information of the tag/terminal, for example, position information or a beam direction of a previous connection of the tag/terminal, a transmission manner used for the previous connection, a collision probability, and/or silence information;
   - a connection request for requesting the setup of a connection between the base station/reader-writer and the node for a target device;
   - a resource for the core network to receive data from the base station/reader-writer or send data to the base station/reader-writer (that is, resource information for transmitting data), for example, an IP address and/or a GTPU address;
   - connection information, for example, the number and identifiers of connections between the base station/reader-writer and the node and to be set up by the base station/reader-writer and a service requirement to be satisfied, such as a QoS index and/or a transmission rate; or
   - bearer information, for example, the number and identifiers of bearers with the tag/terminal and to be set up by the base station/reader-writer and a service requirement to be satisfied, such as a QoS index, a transmission rate, a transmission format, and/or an encryption manner.
      The above information may be information about one tag/terminal or information about multiple tags/terminals.
2. After receiving the trigger message, the reader-writer/base station sends the trigger message to the tag/terminal according to the information provided by the core network to determine a selected tag/terminal and identify the tag. After the tag/terminal receives the trigger message, if the tag/terminal satisfies a condition instructed in the message sent by the reader-writer/base station, the tag/terminal identifies the base station/reader-writer and responds by sending a feedback message.
3. The reader-writer/base station also sends a visit message to the tag/terminal according to the trigger message to inform the selected tag/terminal (that is, the target device) of an operation to be performed. After receiving the visit message, the target device performs a response operation according to the visit message and feeds back execution result information.
4. The reader-writer/base station sends the execution result information to the core network to instruct an execution result of the operation instructed in the visit message. The execution result information may carry at least one of:
   - an identifier of the target device, for example, EPC;
   - the operation type: read, write, inactivation, lock, block write, and/or block erase;
   - an execution result: whether the operation succeeds or not;
   - read content included for the read operation; or
   - auxiliary information of the target device, for example, a transmission manner used for a connection and/or a collision probability.

The above information may be information about one target device or information about multiple target devices.

### Embodiment three

In practical applications, the number of tags/terminals is extremely large, and the reader-writer often needs to identify tens of thousands or even hundreds of thousands of tags/terminals. When the base station wakes up tags/terminals, all tags/terminals receiving a signal may respond, signals of these tags/terminals collide, and the base station may fail to identify signals of some tags/terminals. However, before visiting a tag/terminal, the base station must uniquely identify a target device to be visited. In this embodiment, anti-collision needs to be performed between the base station and the tag/terminal in the process of determining the target device.

In this embodiment, for ease of description, the second node and the third node may be considered as a whole (that is, the reader-writer/base station), signaling interaction between the reader-writer/base station and the tag/terminal is mainly embodied, and interaction between the reader-writer and the base station is not embodied in this embodiment.

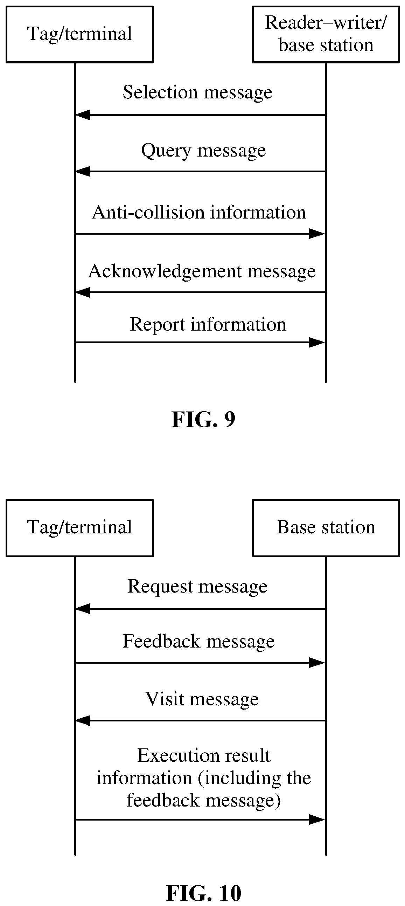

FIG. 9 is a schematic diagram of another communication process between a device and a node according to an embodiment. As shown in FIG. 9, the communication process mainly includes the content below.
1. The reader-writer/base station sends a selection message (or an access request message) to the tag/terminal to select some tags/terminals satisfying a condition. The selection message may be sent through a broadcast and can be received by all the tags/terminals. The selection message may be a MAC data packet generated by MAC. The selection message (or the access request message) may carry at least one of:
   - a complete identifier of the tag/terminal or part of the identifier of the tag/terminal;
   - all data stored in a memory of the tag/terminal or part of the data;
   - a change instruction for changing a selected flag or an inventory flag of the tag/terminal; or
   - resource information for the tag/terminal to receive or send data (that is, resource information for transmitting data), for example, a frequency point, a resource size, a modulation manner, and/or a transmission rate.
2. The reader-writer/base station sends a query message to the tag/terminal to instruct an occasion of a feedback message and prevent the simultaneous feedback of the tags/terminals satisfying the condition. The query message may be sent through the broadcast and can be received by all the tags/terminals. The query message may be a MAC data packet generated by the MAC. The query message may carry a slot count parameter Q or the like.
3. After the tag/terminal receives the selection message, if the tag/terminal satisfies the condition in the selection message, the tag/terminal may be considered as the selected tag/terminal (that is, a target device). The selected tag/terminal sends anti-collision information to the reader-writer/base station according to the query message. For example, the selected tag/terminal should select a random number within a range determined by Q. If the random number is 0, the selected tag/terminal immediately responds. The sent anti-collision information may be a 16-bit random or pseudo-random number RN16.
4. After receiving the anti-collision information, the base station considers that the tag/terminal responds and further makes an acknowledgement with the selected tag/terminal by sending an acknowledgement message to the selected tag/terminal. The acknowledgement message may be sent through a dedicated message and can be received only by the selected tag/terminal. The acknowledgement message may be a MAC data packet generated by the MAC. The acknowledgement message carries RN16 received by the reader-writer/base station in operation 3.
5. Within a certain period, the selected tag/terminal attempts to receive the acknowledgement message from the reader-writer/base station. If the selected tag/terminal receives correct RN16, the selected tag/terminal and the reader-writer/base station confirm each other, and the selected tag/terminal sends report information to the base station, for example, reports identifier information, such as PC, EPC, and/or CRC-16. The selected tag/terminal is the target device. The identifier information may be sent through a dedicated message. The identifier information may be a MAC data packet generated by MAC. Through the identifier information, the tag/terminal can apply to the reader-writer/base station for some resources and send data on these resources. The identifier information may carry the resource information for transmitting data, for example, the frequency point, the resource size, the modulation manner, and/or the transmission rate.

If the selected tag/terminal fails to receive the correct RN16 within the certain period, the selected tag/terminal considers that an error occurs and returns to an idle state.

### Embodiment four

After the reader-writer/base station and the selected tag/terminal confirm each other, the selected tag/terminal is the target device, and the reader-writer/base station may perform a visit operation on the target device, where the visit operation includes, but is not limited to, a read operation, a write operation, an inactivation operation, and a lock operation.

In this embodiment, for ease of description, the second node and the third node may be considered as a whole (that is, the reader-writer/base station), signaling interaction between the reader-writer/base station and the tag/terminal is mainly embodied, and interaction between the reader-writer and the base station is not embodied in this embodiment.

FIG. 10 is a schematic diagram of another communication process between a device and a node according to an embodiment. As shown in FIG. 10, the communication process mainly includes the content below.
1. The base station sends a request message to the target device to request a new random number. The target device may be a dedicated message and can be received only by a particular tag/terminal. The target device may be a MAC data packet generated by MAC. The target device may carry RN16 previously received by the reader-writer/base station. The request message may also carry resource information for the target device to receive or send data, such as a frequency point, a resource size, a modulation manner, and/or a transmission rate. The request message may also carry a configuration (bearer information) for the target device to set up a dedicated bearer with the reader-writer/base station, including a configuration of a transmission format (including a transmission resource, a time, a modulation manner, a transmission rate, an automatic repeat request (ARQ), and/or a hybrid automatic repeat request (HARQ)) and an encryption manner.
2. After receiving the request message, the tag/terminal returns a new 16-bit random or pseudo-random number RN16 (that is, a feedback message). The generated new random number can reduce the tracking or attack of the tag/terminal and the reader-writer/base station by other devices.
3. After receiving the feedback message, the reader-writer/base station sends a visit message to the tag/terminal. The visit message may be a dedicated message and can be received only by the particular tag/terminal. The visit message may be a MAC data packet generated by the MAC. The visit message carries RN16 received by the reader-writer/base station in operation 2 and CRC-16.

When the operation type is the read operation, the visit message may carry a storage region, a starting word address of the storage region, and the number for read and the like.

When the operation type is the write operation, the visit message may carry a storage region and a starting word address of the storage region for write, written content, and the like.

When the operation type is the inactivation operation, the visit message may carry a password and the like.

When the operation type is the lock operation, the visit message may carry a type of the lock operation, a storage region and a starting word address of the storage region for lock, locked content, and the like.

When the operation type is the visit operation, the visit message may carry the password and the like.

When the operation type is a block write operation, the visit message may carry a storage region and a starting word address of the storage region for write, written content, and the like.

When the operation type is a block erase operation, the visit message may carry a storage region, a starting word address of the storage region, and the number for erase, erased content, and the like.

Additionally, the visit message may also carry the resource information for the target device to receive or send data, such as the frequency point, the resource size, the modulation manner, and/or the transmission rate. The visit message may also carry the configuration for the target device to set up the dedicated bearer with the base station, including the transmission format (including the transmission resource, the time, the modulation manner, the transmission rate, the ARQ, and/or the HARQ) and the encryption manner.

4. Within a certain period, the target device attempts to receive a further visit message from the base station. If the target device receives correct RN16 and the target device receives the message and completes the corresponding operation, the target device may send execution result information to the reader-writer/base station, for example, send a feedback message which may include RN16, PC, EPC, and/or CRC-16. The feedback message may be a dedicated message. The execution result information may be a MAC data packet generated by MAC.

When the operation type is the read operation, the execution result information may carry read content.

When the operation type is the write operation, the execution result information may carry a result (success or failure) of the write operation.

When the operation type is the inactivation operation, the execution result information may carry a result (success or failure) of the inactivation operation.

When the operation type is the lock operation, the execution result information may carry a result (success or failure) of the lock operation.

When the operation type is the visit operation, the execution result information may carry a result (success or failure) of the visit operation.

When the operation type is the block write operation, the execution result information may carry a result (success or failure) of the block write operation.

When the operation type is the block erase operation, the execution result information may carry a result (success or failure) of the block erase operation.

If the target device fails to receive the correct RN16 within the certain period, the target device considers that an error occurs and returns to an access state.

### Embodiment five

A process of the base station prompting the reader-writer/Relay to visit the target device may be understood as that the base station/Relay initiates a called process.

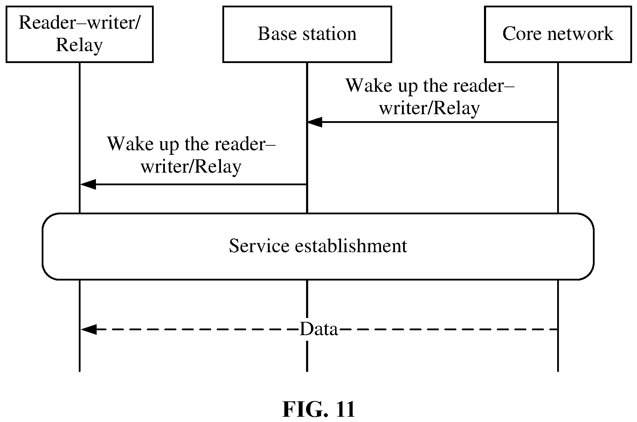

FIG. 11 is a schematic diagram of a communication process between a second node and a third node according to an embodiment. As shown in FIG. 11, the communication process between the second node (such as the base station) and the third node (such as the reader-writer/Relay) mainly includes the content below.

The core network sends a wake-up message to the base station to wake up the reader-writer/Relay. The base station sends a wake-up message to wake up the reader-writer/Relay.

Services between the reader-writer/Relay, the base station, and the core network are established (including connection setup, confirmation of the target device, bearer configuration, and/or anti-collision).

The core network transmits data to the reader-writer/Relay.

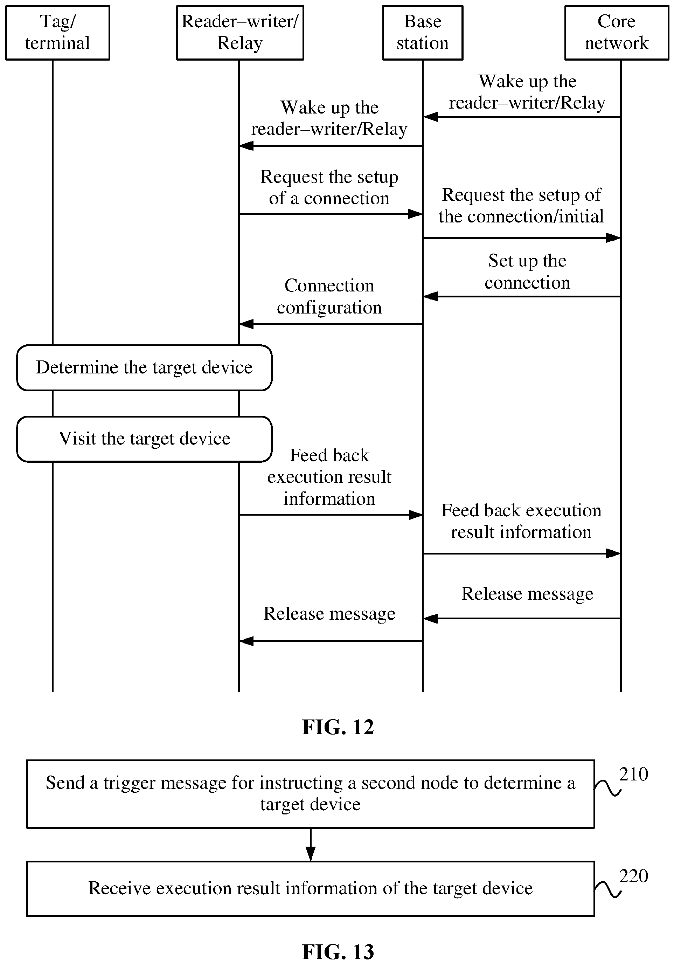

FIG. 12 is a schematic diagram of another communication process between a device and nodes according to an embodiment. As shown in FIG. 12, the communication process mainly includes the content below.
1. The core network sends the wake-up message to the base station to wake up the reader-writer/Relay. The wake-up message may be an interface message between the base station and the core network or may be an application layer data packet. If the wake-up message is the interface message, the wake-up message may be a paging message.
   The wake-up message may carry at least one of:
   - a complete identifier of the third node for uniquely identifying the reader-writer/Relay, or part of the identifier, which can also instruct multiple reader-writers/Relays;
   - a device type of the third node for indicating that the third node is an RFID, a passive device, or the reader-writer;
   - a wake-up cause instructing a visit operation or the like;
   - capability information of the third node, for example, a function supported by the reader-writer/Relay, a supported transmission manner, and/or a version of the reader-writer/Relay;
   - auxiliary information of the third node, for example, position information or a beam direction of a previous connection of the reader-writer/Relay; or
   - the application layer data packet.
2. The base station sends the wake-up message to wake up the reader-writer/Relay. The wake-up message may be an RRC message or an application layer data packet. If the wake-up message is the RRC message, the wake-up message may be a paging message.
   The wake-up message may carry at least one of:
   - the complete identifier of the third node for uniquely identifying the reader-writer/Relay, or part of the identifier, which can also instruct multiple reader-writers/Relays;
   - the device type of the third node for indicating that the third node is the RFID, the passive device, or the reader-writer;
   - the wake-up cause instructing the visit operation or the like; or
   - the application layer data packet.
3. The reader-writer/Relay initiates a connection setup process and sends a connection setup request to the base station. The connection setup request may be an RRC message or an application layer data packet. The RRC message may be an RRC setup request, an RRC resume request, an RRC re-establishment request, or the like.
   The connection setup request may carry at least one of:
   - the complete identifier of the third node for uniquely identifying the reader-writer/Relay, or part of the identifier, which can also instruct multiple reader-writers/Relays;
   - the device type of the third node for indicating that the third node is the RFID, the passive device, or the reader-writer;
   - the wake-up cause instructing the visit operation or the like;
   - information about (generally multiple) tags/terminals supported or stored by the third node, for example, the number of tags/terminals, anti-collision algorithms supported by the tags/terminals, and identifiers, versions, and/or types of the tags/terminals; or
   - the application layer data packet.
4. After receiving the connection setup request, the base station identifies the reader-writer/Relay and sends a connection setup request (also referred to as an initial connection) message to the core network to set up a connection between the base station and the core network for the reader-writer/Relay. The connection setup request may be an interface message between the base station and the core network or may be an application layer data packet. If the connection setup request is the interface message, the connection setup request may be an initial uplink message.
   The connection setup request may carry at least one of:
   - the identifier of the third node for uniquely identifying the reader-writer/Relay, or part of the identifier, which can instruct multiple reader-writers/Relays;
   - the device type of the third node for indicating that the third node is the RFID, the passive device, or the reader-writer;
   - the wake-up cause instructing the visit operation or the like;
   - the information about (generally multiple) tags/terminals supported or stored by the third node, for example, the number of tags/terminals, the anti-collision algorithms supported by the tags/terminals, and the identifiers, versions, and/or types of the tags/terminals; or
   - a message for requesting the setup of the connection between the base station and the core network for the reader-writer/Relay;
   - a resource for the base station to receive data from the core network or send data to the node, for example, an IP address or a GTPU address; or
   - the application layer data packet.
5. After identifying the reader-writer/Relay, the core network sets up the connection for the reader-writer/Relay and instructs the reader-writer/Relay to count or visit the tag/terminal. The core network sends a connection instruction message to the base station. The connection instruction message may be an interface message between the base station and the core network or may be an application layer data packet. The interface message may be an initial downlink message, an initial context setup message, or the like.
6. After receiving the connection instruction message, the base station sets up a connection with the reader-writer/Relay and sends a connection instruction message (including a configuration of the connection) to the reader-writer/Relay. The base station sends a trigger message to the reader-writer/Relay. The trigger message may be an RRC message or may be an application layer data packet. The RRC message may be an RRC setup message, an RRC resume message, an RRC reconfiguration message, or the like.
   The trigger message may carry at least one of:
   - an identifier of the reader-writer/Relay, which can uniquely identify the reader-writer/Relay;
   - an identifier of the tag/terminal or part of the identifier of the tag/terminal, for example, PC, EPC, and CRC-16, or part of the PC, EPC, and CRC-16;
   - data stored in a memory of the tag/terminal or part of the data, for example, a TID or part of the TID;
   - a change instruction for changing a selected flag or an inventory flag of the tag/terminal;
   - a selection message or another message, which may be encapsulated information;
   - an operation type: read, write, inactivation, lock, block write, block erase, and the like;
   - operation content: a storage region, a starting word address of the storage region, and the number for read, a storage region and a starting word address of the storage region for write, written content, a type of a lock operation, a storage region and a starting word address of the storage region for lock, locked content, a storage region, a starting word address of the storage region, and the number for erase, erased content, and the like;
   - a password, for example, an access password;
   - an operation message, for example, a read message, a write message, an inactivation message, a lock message, a block write message, and a block erase message;
   - capability information of the tag/terminal, for example, a function and a transmission manner supported by the tag/terminal, a type of the tag/terminal, a version of the tag/terminal, encryption information, and information about an inactive state of the tag;
   - auxiliary information of the tag/terminal, for example, position information or a beam direction of a previous connection of the tag/terminal, a transmission manner used for the previous connection, a collision probability, and silence information;
   - the number and identifiers of connections to be set up by the base station/reader-writer with the reader-writer/Relay and connection configurations such as a transmission rate, a transmission format, and an encryption manner; or
   - the application layer data packet.
   The above may be information about one tag/terminal or information about multiple tags/terminals.
7. The reader-writer/Relay performs, according to an instruction, a process of determining and visiting the target device.
8. The reader-writer/Relay may feed back execution result information of the target device to the base station. The execution result information may be an RRC message or an application layer data packet. The RRC message may be an RRC setup complete message, an RRC resume complete message, an RRC reconfiguration complete message, or the like.
   The execution result information may carry at least one of:
   - an identifier of the target device or part of the identifier of the target device, for example, PC, EPC, and CRC-16, or part of the PC, EPC, and CRC-16;
   - data stored in a memory of the target device or part of the data, for example, a TID or part of the TID;
   - a random code generated by the target device, for example, RN16;
   - an instruction of whether the target device succeeds in an access;
   - auxiliary information of the target device, for example, whether a collision occurs and a collision probability;
   - a feedback message of the target device, which may be encapsulated information;
   - the operation type: read, write, inactivation, lock, block write, block erase, and the like;
   - an execution result: a success or a failure;
   - read content for the read operation; or
   - the application layer data packet.
   The above may be information about one target device or information about multiple target devices.
9. After receiving the execution result information, the base station feeds back execution result information to the core network. The execution result information may be an interface message between the base station and the core network or may be an application layer data packet. If it is the interface message, the execution result information may be an initial uplink message.
   The execution result information may carry at least one of:
   - the identifier of the target device or part of the identifier of the target device, for example, the PC, EPC, and CRC-16, or part of the PC, EPC, and CRC-16;
   - the data stored in the memory of the target device or part of the data, for example, the TID or part of the TID;
   - the random code generated by the target device, for example, RN16;
   - the instruction of whether the target device succeeds in the access;
   - the auxiliary information of the target device, for example, whether the collision occurs and the collision probability;
   - the feedback message of the target device, which may be the encapsulated information;
   - the operation type: read, write, inactivation, lock, block write, block erase, and the like;
   - the execution result: the success or the failure;
   - the read content for the read operation;
   - auxiliary information of the target device, for example, a transmission manner used for a connection;
   - a request for the setup of a connection between the base station/reader-writer and the node for the target device;
   - a resource for the base station/reader-writer to receive data from the node or send data to the node, for example, an IP address or a GTPU address; or
   - the application layer data packet.
   The above may be information about one target device or information about multiple target devices.
10. After receiving the execution result information, the core network may trigger the reader-writer/Relay to perform a release operation and send a release message to the base station if the operation ends. The release message may be an interface message between the base station and the core network or may be an application layer data packet. If the release message is the interface message, the release message may be a release message.
   The release message may carry at least one of:
   - the identifier of the target device, reader-writer/Relay, which can uniquely identify the reader-writer/Relay, or part of the identifier, which can instruct multiple reader-writers/Relays;
   - the device type for indicating the RFID, the passive device, or the reader-writer;
   - a cause instructing an end of the operation or the like; or
   - the application layer data packet.
11. After receiving the release message, the base station may trigger the reader-writer/Relay to perform the release operation and send a release message to the target device. The release message may be an RRC message or an application layer data packet. If the release message is the RRC message, the release message may be an RRC connection release message.
   The release message may carry at least one of:
   - the identifier of the reader-writer/Relay, which can uniquely identify the reader-writer/Relay, or part of the identifier, which can instruct multiple reader-writers/Relays;
   - the device type for indicating the RFID, the passive device, or the reader-writer;
   - the cause instructing the end of the operation or the like; or
   - the application layer data packet.

### Embodiment six

The base station needs to determine whether to send data to the tag/terminal in the cellular network according to a state of the tag/terminal, and the tag/terminal selects which operation to perform according to the state of the tag/terminal, for example, silence or receiving data. Then, both the base station and the tag/terminal need to maintain the state of the tag/terminal.

According to possible operations performed by the tag/terminal, possible states include the states below.
(1) Idle state: The tag/terminal in the idle state keeps silent and does not send data. The tag/terminal in the idle state may have at least one of the behaviors below.

An excitation signal is received.

Energy is sensed, that is, surrounding energy can be sensed and acquired.

The tag/terminal receives a message, where the message may be a selection message or another message including information related to an identity message of the tag/terminal or information in a memory of the tag/terminal; or the message may be an inventory or count message or another message including an instruction to resolve a collision, time information of a feedback message, or the like. The message may be an access request instruction.

No signal or data is sent.

The idle state includes Ready of the tag/terminal. (2) Access state: The tag/terminal in the access state performs an access operation and cannot perform a visit operation. The tag/terminal in the access state and the base station identify each other and confirm that the other party is an object on which the operation is to be performed. The tag/terminal in the access state may have at least one of the behaviors below.

An excitation or wake-up signal is received.

Energy is sensed, that is, surrounding energy can be sensed and acquired.

A message is received, where the message may be a selection message or another message including information related to an identity message of the tag/terminal or information in a memory of the tag/terminal; the message may be an inventory or count message or another message including an instruction to resolve a collision, random information for anti-collision of the tag/terminal, or time information of a feedback message; or the message may be an access request instruction.

Signals, data, or response messages are sent, where the response messages may be response messages of an inventory message, a count message, an access request message, and another message and may also include identity information of the tag/terminal, random information for anti-collision, or the like. These messages may also include an access success instruction, an access failure instruction, or the like.

A collision is resolved. When multiple tags/terminals send signals within the same time or partially the same time and the collision occurs, the tag/terminal sends its own message according to an instruction of the base station.

An identity is recognized. According to an instruction of the base station/reader-writer/Relay, the tag/terminal reports the identity or a password or a generated random number to the base station so that the base station can identify the tag/terminal and the tag/terminal can know that the base station has identified itself.

Resources are selected. The tag/terminal can select some resources to receive or send data according to an instruction of the base station/reader-writer/Relay, or the tag/terminal can apply to the base station for some resources and send data on these resources.

The access state includes arbitrate, reply, and acknowledged states of the tag/terminal. (3) Connected state: The tag/terminal in the connected state can perform a visit operation. The tag/terminal in the connected state may have at least one of the behaviors below.

An excitation or wake-up signal is received.

Energy is sensed, that is, surrounding energy can be sensed and acquired.

A visit message is received, where the visit message includes information related to an identity of the tag/terminal, password information of the tag/terminal, or random information for anti-collision of the tag/terminal; or the message may include a type of a visit operation, storage positions to be visited, and the like. The visit message includes time information of a feedback message.

Signals, data, or response messages are sent. A response message of the visit message may be sent. These messages may also include identity information of the tag/terminal, random information for anti-collision of the tag/terminal, and the like. These messages may also include a success instruction, a failure instruction, or the like.

The connected state includes open and secured states of the tag/terminal.

The tag/terminal establishes a one-to-one dedicated bearer with the base station, including a configuration of a transmission format (including a transmission resource, a time, a modulation manner, a transmission rate, an ARQ, an HARQ, and the like) or an encryption manner.

The base station and the core network set up a connection for the tag/terminal. (4) Inactive state: To alarm, discard, and avoid an access collision, the base station may inactivate the tag/terminal, and the tag/terminal in the inactive state cannot operate. The tag/terminal in the inactive state may have at least one of the behaviors below.

An excitation or wake-up signal is received.

Energy is sensed, that is, surrounding energy can be sensed and acquired.

Signals cannot be sent, and no response is performed.

Signals are not received, and no operation is performed on signals from the base station.

The inactive state includes a killed state of the tag/terminal. (5) Silent state: The tag/terminal in the silent state keeps silent and performs a power-saving operation. The tag/terminal in the silent state may have at least one of the behaviors below.

An excitation or wake-up signal is not received.

Energy is not sensed, that is, surrounding energy cannot be sensed and acquired.

Signals cannot be sent, and no response is performed.

Signals are not received, and no operation is performed on signals from the base station.

An embodiment of the present application further provides a communication method. The communication method may be applied by a first node (such as a core network). FIG. 13 is a flowchart of another communication method according to an embodiment. As shown in FIG. 13, the method according to the embodiment includes operations 210 and 220.

In 210, a trigger message is sent, where the trigger message is used for instructing a second node to determine a target device.

In 220, execution result information of the target device is received.

According to the method in this embodiment, the first node (such as the core network) may send the trigger message to the second node to trigger an operation of searching devices in a network for the target device, so as to determine and visit the target device through the second node; the second node sends a visit message to instruct the target device to perform a corresponding operation, such as reading a tag, erasing a tag, or modifying a tag; and the target device may perform the corresponding operation accordingly and feed back the execution result information to the first node through the second node, thereby implementing radio-frequency identification of an RFID tag in a cellular network.

In an embodiment, after the trigger message is sent, operation 212 is further included: information about the target device is received; where the information about the target device includes at least one of: a complete identifier or a partial identifier of the target device; all or part of data stored in the target device; a random code corresponding to the target device; an instruction of an access result of the target device; capability information of the target device; auxiliary information of the target device; a feedback message of the target device; a connection request for the target device; or resource information for transmitting data.

In an embodiment, after the trigger message is sent, operation 214 is further included: a visit instruction message is sent, where the visit instruction message is used for instructing an operation performed on the target device, and the visit instruction message includes at least one of the following information about the target device: the complete identifier or the partial identifier of the target device; the random code corresponding to the target device; an operation type; operation content; a password; an operation message; the connection request for the target device; resource information for transmitting data; the capability information of the target device; the auxiliary information of the target device; connection information of the target device; or bearer information of the target device.

In an embodiment, before the execution result information of the target device is received, operation 230, operation 240, and operation 250 are further included. In 230, a wake-up message is sent, where the wake-up message is used for instructing the second node to wake up a third node. In 240, a connection setup request is received from the second node. In 250, a connection instruction message is sent to the second node, where the connection instruction message is used for instructing the second node to set up a connection with the third node.

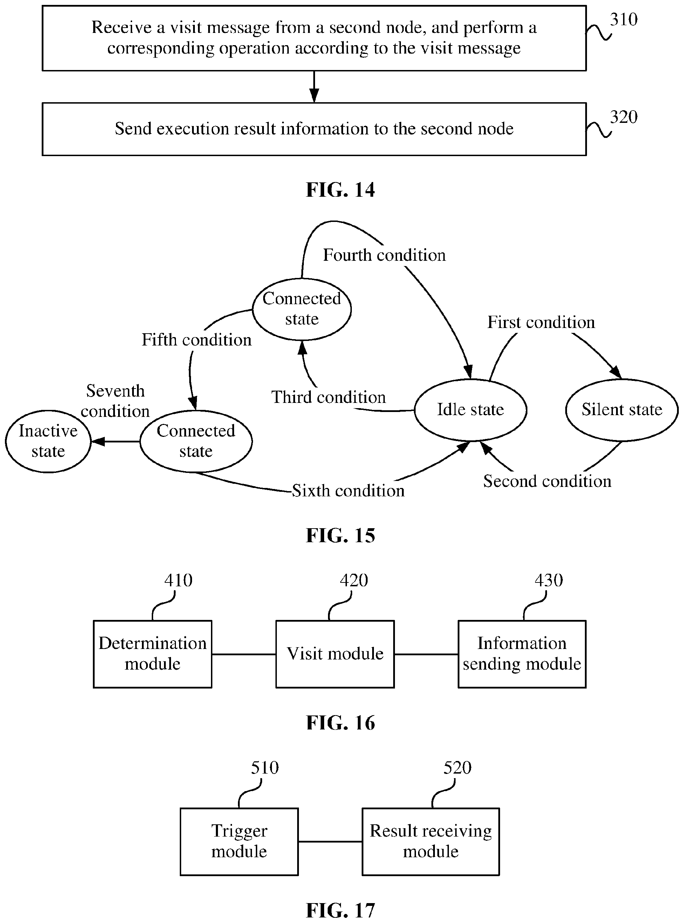

An embodiment of the present application further provides a communication method. The method may be applied by a device (e.g. tag/terminal). FIG. 14 is a flowchart of another communication method according to an embodiment. As shown in FIG. 14, the method according to the embodiment includes operations 310 and 320.

In operation 310, a visit message is received from a second node, and a corresponding operation is performed according to the visit message.

In operation 320, execution result information is sent to the second node.

In this embodiment, a first node (such as a core network) may send a trigger message to the second node to trigger an operation of searching devices in a network for a target device, so as to determine and visit the target device through the second node; the second node sends the visit message to instruct the target device to perform the corresponding operation, such as reading a tag, erasing a tag, or modifying a tag; and the target device may perform the corresponding operation accordingly and feed back the execution result information to the first node through the second node, thereby implementing radio-frequency identification of an RFID tag in a cellular network.

In an embodiment, the target device is in one of the following states:
- an idle state in which the target device does not support a data transmission;
- an access state in which the target device supports an access operation and does not support a visit operation;
- a connected state in which the target device supports a visit operation;
- an inactive state in which the target device does not operate; or
- a silent state in which the target device enters a power saving mode.

In an embodiment, the target device switches from the idle state to the silent state in the case where a first condition is satisfied.

The first condition includes at least one of the conditions below.

A duration for which the target device is in the idle state reaches a first set time.

The number of times configurations are received in the idle state reaches a first number of times. An instruction to switch to the silent state is received.

In an embodiment, the target device switches from the silent state to the idle state in the case where a second condition is satisfied.

The second condition includes at least one of the conditions below.

A duration for which the target device is in the silent state reaches a second set time.

The number of times configurations are received in the silent state reaches a second number of times.

A set signal or a set message is detected.

No set signal or no set message is detected. Signal energy is detected to be lower than an energy threshold.

Reference signal received power (RSRP) is detected to be lower than a power threshold.

In an embodiment, the target device switches from the idle state to the access state in the case where a third condition is satisfied.

The third condition includes at least one of the conditions below.

An excitation signal or a wake-up signal is received.

A selection message is received, and a condition in the selection message is satisfied.

A query message is received, and a condition in the query message is satisfied.

An access request message is received, and a condition in the access request message is satisfied.

A condition for entering an arbitrate, reply, or acknowledged state is satisfied.

In an embodiment, the target device switches from the access state to the idle state in the case where a fourth condition is satisfied.

The fourth condition includes at least one of the conditions below.

An error occurs.

No excitation signal or no wake-up signal is received within a set time period.

An access fails.

In an embodiment, the target device switches from the access state to the connected state in the case where a fifth condition is satisfied. The fifth condition includes at least one of the conditions below.

The target device has been determined by the second node.

Identifier information has been reported.

Anti-collision information has been reported.

A condition for entering an open or secured state is satisfied.

The visit message is received.

A dedicated bearer or a transmission format has been configured.

A corresponding connection has been set up.

In an embodiment, the target device switches from the connected state to the idle state in the case where a sixth condition is satisfied.

The sixth condition includes at least one of the conditions below.

An error occurs.

No excitation signal or no wake-up signal is received within the set time period.

Energy fails to be sensed within a set time period.

In an embodiment, the target device switches from the connected state to the inactive state in the case where a seventh condition is satisfied.

The seventh condition includes that an inactivation instruction message is received, and a condition in the inactivation instruction message is satisfied.

In an embodiment, the target device performs state switching in at least one of the manners below. The target device enters the silent state after a first time threshold and enters the idle state after a second time threshold in the silent state.

A count is increased by one each time instruction information to enter the silent state is received, and the target device enters the silent state in the case where the count is greater than or equal to a count threshold and enters the idle state after a third time threshold in the silent state.

A count is generated and decreased by one each time instruction information to enter the silent state is received, and the target device enters the silent state in the case where the count is equal to 0 and enters the idle state after a fourth time threshold in the silent state.

The target device enters the silent state in response to receiving instruction information to enter the silent state and enters the idle state after a fifth time threshold in the silent state.

The target device enters the silent state in response to detecting, within a sixth time threshold, that signal energy or signal received power is lower than a set threshold and enters the idle state after a seventh time threshold in the silent state.

In an embodiment, the method further includes operations 301, 303, 305, and 307.

In 301, the selection message and the query message are received from the second node.

In 303, the anti-collision information is sent to the second node.

In 305, an acknowledgement message is received from the second node.

In 307, report information is sent to the second node.

In an embodiment, the method further includes operations 311 and 312.

In 311, a request message is received from the second node.

In 312, a random number is generated according to the request message.

State switching of a device is described below through embodiments. It is to be noted that in the following embodiments, the device is a tag or a terminal, for example.

### Embodiment six

FIG. 15 is a schematic diagram of state switching of a device according to an embodiment. As shown in FIG. 15, the state switching of the device mainly includes the cases below.
(1) The tag or the terminal in an idle state switches to a silent state when satisfying a first condition. The first condition may be at least one of the conditions below.

A requirement of a certain period is satisfied (that is, a period for which the tag or the terminal is in the idle state reaches a first set time). For example, the tag or the terminal enters the silent state after a time interval configured by a base station/reader-writer/Relay.

A requirement of a certain number of times is satisfied (the number of times configurations are received in the idle state reaches a first number of times). For example, according to the number of times configured by the base station/reader-writer/Relay, the tag or the terminal increases or decreases the number of times by one each time the tag or the terminal receives an excitation signal or a particular message or another signal; and the tag or the terminal enters the silent state if a result of increasing or decreasing the number of times by one satisfies the configured number of times or is 0.

An instruction to switch to the silent state is received from the base station or the reader-writer. For example, the base station/reader-writer/Relay sends an instruction message to the tag or the terminal, where the instruction message may carry a relevant instruction of the silent state, for example, whether to enter the silent state and an identifier of the tag or the terminal. After receiving the instruction message, the tag or the terminal enters the silent state. (2) The tag or the terminal in the silent state switches to the idle state when satisfying a second condition. The second condition may be at least one of the conditions below.

A requirement of a certain period is satisfied (that is, a period for which the tag or the terminal is in the silent state reaches a second set time). For example, the tag or the terminal enters the idle state after a time interval configured by the base station/reader-writer/Relay.

A requirement of a certain number of times is satisfied (that is, the number of times configurations are received in the silent state reaches a second number of times). For example, according to the number of times configured by the base station/reader-writer/Relay, the tag or the terminal increases or decreases the number of times by one each time the tag or the terminal receives an excitation signal or a particular message or another signal; and the tag or the terminal enters the idle state if a result of increasing or decreasing the number of times by one satisfies the configured number of times or is 0.

The tag or the terminal enters the silent state when detecting a set signal or a set message.

The tag or the terminal enters the silent state when detecting no set signal or no set message. Detected signal energy is lower than a threshold.

A detected RSRP value is lower than a threshold. (3) The tag or the terminal in the idle state switches to an access state when satisfying a third condition. The third condition may be at least one of the conditions below.

The tag or the terminal receives an excitation signal or a wake-up signal.

The tag or the terminal receives a selection message and satisfies a condition in the selection message, such as a condition about an identity.

The tag or the terminal receives a query message and satisfies a condition in the query message, for example, satisfies an instruction to resolve a collision.

The tag or the terminal receives an access request message and satisfies a condition in the access request message, such as a condition about an identity. The tag or the terminal satisfies a condition for entering an arbitrate, reply, or acknowledged state. (4) The tag or the terminal in the access state switches to the idle state when satisfying a fourth condition. The fourth condition may be at least one of the conditions below.

The tag or the terminal has an error.

The tag or the terminal receives no excitation signal or no wake-up signal within a set time period. The tag or the terminal fails in an access. (5) The tag or the terminal in the access state switches to a connected state when satisfying a fifth condition. The fifth condition may be at least one of the conditions below.

A target device has been determined by a second node, that is, the tag or the terminal completes a process of determining the tag or the terminal, and the base station can uniquely identify the tag or the terminal.

Identifier information has been reported, that is, the tag or the terminal reports information about the identity, such as PC, EPC, and CRC-16.

Anti-collision information has been reported, that is, the tag or the terminal reports random information for anti-collision, such as a random number.

A condition for entering an open or secured state is satisfied. The tag or the terminal satisfies the condition for entering the open or secured state.

The tag or the terminal receives a visit message.

A dedicated bearer or a transmission format has been configured, that is, the tag or the terminal completes a configuration of the dedicated bearer or the transmission format.

A corresponding connection has been set up, that is, the base station/reader-writer and a core network set up a connection for the tag or the terminal. (6) The tag or the terminal in the connected state switches to the idle state when satisfying a sixth condition. The sixth condition may be at least one of the conditions below.

The tag or the terminal has an error.

The tag or the terminal receives no excitation signal or no wake-up signal within the set time period. The tag or the terminal cannot sense energy, that is, cannot sense and acquire surrounding energy, within a set time period. (7) The tag or the terminal in the connected state switches to an inactive state when satisfying a seventh condition.

The seventh condition may be that an inactivation message is received, and a condition carried in the inactivation message is satisfied, for example, inactivation passwords are consistent.

### Embodiment seven

The tag/terminal has limited energy and thus has a power saving requirement. In a power saving state, the tag/terminal is in a silent state and does not receive a signal. In a non-power saving state, the tag/terminal needs to work normally.

In this embodiment, a base station/reader-writer configures a first time threshold and a second time threshold. According to the configuration of the base station/reader-writer, the tag/terminal enters the silent state after the first time threshold and enters an idle state from the silent state after the second time threshold in the silent state.

The base station/reader-writer configures a third time threshold and a count threshold. The base station/reader-writer sends a message or a signal to the tag/terminal, where the message or the signal may carry a relevant instruction of the silent state, for example, whether to enter the silent state. Each time the tag/terminal receives the message or the signal, the count is increased by one. If a result of increasing the count by one is equal to or greater than the count threshold, the tag/terminal enters the silent state. The tag/terminal enters the idle state from the silent state after the third time threshold in the silent state.

The base station/reader-writer configures a fourth time threshold and a count threshold. The tag/terminal generates a count equal to or related to the count threshold according to the configuration. The base station/reader-writer sends the message or the signal to the tag/terminal, where the message or the signal may carry the relevant instruction of the silent state, for example, whether to enter the silent state. Each time the tag/terminal receives the message or the signal, the count is decreased by one. If a result of decreasing the count by one is equal to 0, the tag/terminal enters the silent state. The tag/terminal enters the idle state from the silent state after the fourth time threshold in the silent state.

The base station/reader-writer configures a fifth time threshold. The base station/reader-writer sends the message or the signal to the tag/terminal, where the message or the signal may carry the relevant instruction of the silent state, for example, whether to enter the silent state and an identifier of the tag/terminal. After receiving the message or the signal, the tag/terminal enters the silent state. The tag/terminal enters the idle state from the silent state after the fifth time threshold in the silent state.

The base station/reader-writer configures a sixth time threshold, a seventh time threshold, and a set threshold. The tag/terminal enters the silent state if no signal or no message is detected or detected signal energy or RSRP is lower than the set threshold within the sixth time threshold. The tag/terminal enters the idle state from the silent state after the seventh time threshold in the silent state.

It is to be noted that the time thresholds in this embodiment may be equal or unequal; and a time threshold for entering the idle state from the silent state may be equal to a second set time in a second condition in the preceding embodiment.

An embodiment of the present application further provides a communication apparatus. FIG. 16 is a structural diagram of a communication apparatus according to an embodiment. As shown in FIG. 16, the communication apparatus includes a determination module 410, a visit module 420, and an information sending module 430. The determination module 410 is configured to determine a target device according to a trigger message from a first node. The visit module 420 is configured to send a visit message to the target device, where the visit message is used for instructing the target device to perform a corresponding operation. The information sending module 430 is configured to send execution result information of the target device to the first node.

The communication apparatus in this embodiment determines the target device according to the trigger message, visits the target device, and receives the execution result information fed back by the target device, thereby implementing radio-frequency identification of an RFID tag in a cellular network.

In an embodiment, the trigger message includes at least one of the following information about at least one device: a complete identifier or a partial identifier of the device; all or part of data stored in the device; a change instruction for a selected flag or an inventory flag; a selection message of the device; capability information of the device; auxiliary information of the device; an operation type; operation content; a password; an operation message; a connection request; resource information for transmitting data; connection information; or bearer information.

In an embodiment, the apparatus further includes a first sending module. The first sending module is configured to, after the target device is determined according to the trigger message from the first node, send information about the target device to the first node. Where the information about the target device includes at least one of: a complete identifier or a partial identifier of the target device; all or part of data stored in the target device; a random code corresponding to the target device; an instruction of an access result of the target device; capability information of the target device; auxiliary information of the target device; a feedback message of the target device; a connection request for the target device; or resource information for transmitting data.

In an embodiment, the apparatus further includes a first receiving module. The first receiving module is configured to, before the visit message is sent to the target device, receive a visit instruction message from the first node. The visit instruction message is used for instructing an operation performed on the target device, and the visit instruction message includes at least one of the following information about the target device: the complete identifier or the partial identifier of the target device; the random code corresponding to the target device; the operation type; the operation content; the password; the operation message; the connection request for the target device; the resource information for transmitting data; the capability information of the target device; the auxiliary information of the target device; connection information of the target device; or bearer information of the target device.

In an embodiment, the execution result information includes at least one of: the complete identifier or the partial identifier of the target device; all or part of the data stored in the target device; the random code corresponding to the target device; the instruction of the access result of the target device; the auxiliary information of the target device; the feedback message of the target device; the operation type; an execution result; read content; the connection request for the target device; the resource information for transmitting data; or an application layer data packet.

In an embodiment, the target device is in one of the following states:
- an idle state in which the target device does not support a data transmission;
- an access state in which the target device supports an access operation and does not support a visit operation;

- a connected state in which the target device supports a visit operation;
- an inactive state in which the target device does not operate; or
- a silent state in which the target device enters a power saving mode.

In an embodiment, the determination module 410 includes a query unit, an anti-collision unit, an acknowledgement unit, and a determination unit.

The query unit is configured to send a selection message and a query message to at least one device according to the trigger message.

The anti-collision unit is configured to receive anti-collision information fed back by at least one device of.

The acknowledgement unit is configured to send an acknowledgement message to the at least one device that feeds back the anti-collision information.

The determination unit is configured to receive report information, where the at least one device that feeds back the anti-collision information sends the report information according to the acknowledgement message, and determine the at least one device that sends the report information to be the target device.

In an embodiment, the apparatus further includes a random number request module and a random number receiving module.

The random number request module is configured to, before the visit message is sent to the target device, send a request message to the target device, where the request message is used for instructing the target device to generate a random number.

The random number receiving module is configured to receive the random number returned by the target device.

In an embodiment, the visit message includes instruction information of at least one of a read operation; a write operation; an inactivation operation; a lock operation; a visit operation; a block write operation; or a block erase operation.

The visit message may further include at least one of the resource information for transmitting data; or the capability information and the bearer information of the target device.

In an embodiment, the apparatus further includes a wake-up module, a request forwarding module, and a setup module.

The wake-up module is configured to, before the visit message is sent to the target device, wake up a third node according to a wake-up message from the first node.

The request forwarding module is configured to receive a connection setup request from the third node and send a connection setup request to the first node.

The setup module is configured to set up a connection with the third node according to a connection instruction message from the first node.

In an embodiment, the wake-up message includes at least one of: an identifier of the third node; a type of the third node; a wake-up cause; capability information of the third node; auxiliary information of the third node; or an application layer data packet.

In an embodiment, the connection setup request includes at least one of: the identifier of the third node; the type of the third node; the wake-up cause; information about devices supported or stored by the third node; a resource for transmitting data; or an application layer data packet.

The communication apparatus provided in this embodiment and the communication method provided in the preceding embodiments belong to the same concept. For technical details not described in detail in this embodiment, reference may be made to any one of the preceding embodiments, and this embodiment has the same beneficial effects as the communication method performed.

An embodiment of the present application further provides a communication apparatus. FIG. 17 is a structural diagram of another communication apparatus according to an embodiment. As shown in FIG. 17, the communication apparatus includes a trigger module 510 and a result receiving module 520. The trigger module 510 is configured to send a trigger message for instructing a second node to determine a target device. The result receiving module 520 is configured to receive execution result information of the target device.

The communication apparatus in this embodiment sends the trigger message to trigger an operation of searching devices in a network for the target device, so as to determine and visit the target device through the second node, and receives the execution result information fed back by the target device, thereby implementing radio-frequency identification of an RFID tag in a cellular network. In an embodiment, the apparatus further includes a second receiving module. The second receiving module is configured to receive information about the target device; where the information about the target device includes at least one of: a complete identifier or a partial identifier of the target device; all or part of data stored in the target device; a random code corresponding to the target device; an instruction of an access result of the target device; capability information of the target device; auxiliary information of the target device; a feedback message of the target device; a connection request for the target device; or resource information for transmitting data.

In an embodiment, the apparatus further includes a second sending module. The second sending module is configured to send a visit instruction message, where the visit instruction message is used for instructing an operation performed on the target device, and the visit instruction message includes at least one of the following information about the target device: the complete identifier or the partial identifier of the target device; the random code corresponding to the target device; an operation type; operation content; a password; an operation message; the connection request for the target device; resource information for transmitting data; the capability information of the target device; the auxiliary information of the target device; connection information of the target device; or bearer information of the target device.

In an embodiment, the apparatus further includes a wake-up instruction module, a request receiving module, and a connection instruction module.

The wake-up instruction module is configured to send a wake-up message for instructing the second node to wake up a third node.

The request receiving module is configured to receive a connection setup request from the second node.

The connection instruction module is configured to send a connection instruction message to the second node, where the connection instruction message is used for instructing the second node to set up a connection with the third node.

The communication apparatus provided in this embodiment and the communication method provided in the preceding embodiments belong to the same concept. For technical details not described in detail in this embodiment, reference may be made to any one of the preceding embodiments, and this embodiment has the same beneficial effects as the communication method performed.

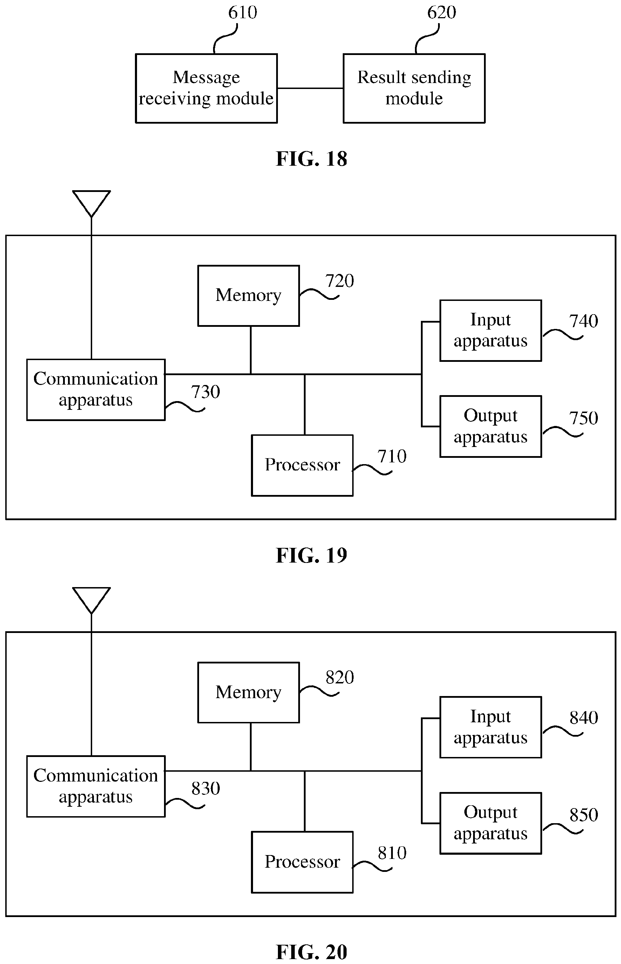

An embodiment of the present application further provides a communication apparatus. FIG. 18 is a structural diagram of another communication apparatus according to an embodiment. As shown in FIG. 18, the communication apparatus includes a message receiving module 610 and a result sending module 620. The message receiving module 610 is configured to receive a visit message from a second node and perform a corresponding operation according to the visit message. The result sending module 620 is configured to send execution result information to the second node. The communication apparatus in this embodiment performs the corresponding operation according to the received visit message and sends the execution result information to the second node, thereby implementing radio-frequency identification of an RFID tag in a cellular network.

In an embodiment, a target device is in one of the following states:
- an idle state in which the target device does not support a data transmission;
- an access state in which the target device supports an access operation and does not support a visit operation;
- a connected state in which the target device supports a visit operation;
- an inactive state in which the target device does not operate; or
- a silent state in which the target device enters a power saving mode.

In an embodiment, the target device switches from the idle state to the silent state in the case where a first condition is satisfied.

The first condition includes at least one of the conditions below.

A duration for which the target device is in the idle state reaches a first set time.

The number of times configurations are received in the idle state reaches a first number of times. An instruction to switch to the silent state is received.

In an embodiment, the target device switches from the silent state to the idle state in the case where a second condition is satisfied.

The second condition includes at least one of the conditions below.

A duration for which the target device is in the silent state reaches a second set time.

The number of times configurations are received in the silent state reaches a second number of times.

A set signal or a set message is detected.

No set signal or no set message is detected. Signal energy is detected to be lower than an energy threshold.

RSRP is detected to be lower than a power threshold.

In an embodiment, the target device switches from the idle state to the access state in the case where a third condition is satisfied.

The third condition includes at least one of the conditions below.

An excitation signal or a wake-up signal is received.

A selection message is received, and a condition in the selection message is satisfied.

A query message is received, and a condition in the query message is satisfied.

An access request message is received, and a condition in the access request message is satisfied. A condition for entering an arbitrate, reply, or acknowledged state is satisfied.

In an embodiment, the target device switches from the access state to the idle state in the case where a fourth condition is satisfied.

The fourth condition includes at least one of the conditions below.

An error occurs.

No excitation signal or no wake-up signal is received within a set time period.

An access fails.

In an embodiment, the target device switches from the access state to the connected state in the case where a fifth condition is satisfied.

The fifth condition includes at least one of the conditions below.

The target device has been determined by the second node.

Identifier information has been reported.

Anti-collision information has been reported.

A condition for entering an open or secured state is satisfied.

The visit message is received.

A dedicated bearer or a transmission format has been configured.

A corresponding connection has been set up.

In an embodiment, the target device switches from the connected state to the idle state in the case where a sixth condition is satisfied.

The sixth condition includes at least one of the conditions below. An error occurs. No excitation signal or no wake-up signal is received within the set time period. Energy fails to be sensed within a set time period.

In an embodiment, the target device switches from the connected state to the inactive state in the case where a seventh condition is satisfied. The seventh condition includes that an inactivation instruction message is received, and a condition in the inactivation instruction message is satisfied. In an embodiment, the target device performs state switching in at least one of the manners below. The target device enters the silent state after a first time threshold and enters the idle state after a second time threshold in the silent state.

A count is increased by one each time instruction information to enter the silent state is received, and the target device enters the silent state in the case where the count is greater than or equal to a count threshold and enters the idle state after a third time threshold in the silent state.

A count is generated and decreased by one each time instruction information to enter the silent state is received, and the target device enters the silent state in the case where the count is equal to 0 and enters the idle state after a fourth time threshold in the silent state.

The target device enters the silent state in response to receiving instruction information to enter the silent state and enters the idle state after a fifth time threshold in the silent state.

The target device enters the silent state in response to detecting, within a sixth time threshold, that signal energy or signal received power is lower than a set threshold and enters the idle state after a seventh time threshold in the silent state.

The communication apparatus provided in this embodiment and the communication method provided in the preceding embodiments belong to the same concept. For technical details not described in detail in this embodiment, reference may be made to any one of the preceding embodiments, and this embodiment has the same beneficial effects as the communication method performed.

An embodiment of the present application further provides a node which is a first node or a second node. FIG. 19 is a structural diagram of hardware of a node according to an embodiment. As shown in FIG. 19, the node provided in the present application includes a memory 720, a processor 710, and a computer program stored in the memory and executable by the processor, where the processor 710 executes the computer program to perform the preceding communication method applied by the first node to the second node.

The node may further include the memory 720. One or more processors 710 may be provided in the node, and one processor 710 is shown as an example in FIG. 19. The memory 720 is configured to store one or more programs, where the one or more programs are executed by the one or more processors 710 to cause the one or more processors 710 to perform the communication method applied by the first node or the second node in the embodiments of the present application.

The node further includes a communication apparatus 730, an input apparatus 740, and an output apparatus 750.

The processor 710, the memory 720, the communication apparatus 730, the input apparatus 740, and the output apparatus 750 in the node may be connected through a bus or in other manners, and the connection through the bus is shown as an example in FIG. 19.

The input apparatus 740 may be used for receiving input digital or character information and generating keying signal input related to user settings of the node and function control of the node. The output apparatus 750 may include a display device such as a display screen.

The communication apparatus 730 may include a receiver and a sender. The communication apparatus 730 is configured to perform information transceiving communication under the control of the processor 710.

As a computer-readable storage medium, the memory 720 may be configured to store software programs, computer-executable programs, and modules, such as program instructions/modules corresponding to the communication method in the embodiments of the present application (for example, the determination module 310, the visit module 320, and the information sending module 330 in the communication apparatus). The memory 720 may include a program storage region and a data storage region. The program storage region may store an operating system and an application program required by at least one function. The data storage region may store data created according to the use of the node. Additionally, the memory 720 may include a high-speed random-access memory and may further include a non-volatile memory, such as at least one disk memory, a flash memory, or another non-volatile solid-state memory. In some examples, the memory 720 may further include memories remotely disposed relative to the processor 710, and these remote memories may be connected to the node via a network. Examples of the preceding network include, but are not limited to, the Internet, an intranet, a local area network, a mobile communication network, and a combination thereof.

An embodiment of the present application further provides a device. FIG. 20 is a structural diagram of hardware of a device according to an embodiment. As shown in FIG. 20, the device provided in the present application includes a memory 820, a processor 810, and a computer program stored in the memory and executable by the processor, where the processor 810 executes the computer program to perform the preceding communication method applied by the device.

The device may further include the memory 820. One or more processors 810 may be provided in the device, and one processor 810 is shown as an example in FIG. 20. The memory 820 is configured to store one or more programs, where the one or more programs are executed by the one or more processors 810 to cause the one or more processors 810 to perform the communication method applied by the device in the embodiments of the present application.

The device further includes a communication apparatus 830, an input apparatus 840, and an output apparatus 850.

The processor 810, the memory 820, the communication apparatus 830, the input apparatus 840, and the output apparatus 850 in the device may be connected through a bus or in other manners, and the connection through the bus is shown as an example in FIG. 20.

The input apparatus 840 may be used for receiving input digital or character information and generating keying signal input related to user settings of the device and function control of the device. The output apparatus 850 may include a display device such as a display screen.

The communication apparatus 830 may include a receiver and a sender. The communication apparatus 830 is configured to perform information transceiving communication under the control of the processor 810.

As a computer-readable storage medium, the memory 820 may be configured to store software programs, computer-executable programs, and modules, such as program instructions/modules corresponding to the communication method in the embodiments of the present application (for example, the message receiving module 410 and the result sending module 420 in the communication apparatus). The memory 820 may include a program storage region and a data storage region. The program storage region may store an operating system and an application program required by at least one function. The data storage region may store data created according to the use of the device. Additionally, the memory 820 may include a high-speed random-access memory and may further include a non-volatile memory, such as at least one disk memory, a flash memory, or another non-volatile solid-state memory. In some examples, the memory 820 may further include memories remotely disposed relative to the processor 810, and these remote memories may be connected to the device via a network. Examples of the preceding network include, but are not limited to, the Internet, an intranet, a local area network, a mobile communication network, and a combination thereof.

An embodiment of the present application further provides a storage medium. The storage medium stores a computer program which, when executed by a processor, causes the processor to perform the communication method according to any embodiment of the present application. The method includes: determining a target device according to a trigger message from a first node; sending a visit message to the target device, where the visit message is used for instructing the target device to perform a corresponding operation; and sending execution result information of the target device to the first node.

Alternatively, the method includes: sending a trigger message for instructing a second node to determine a target device; and receiving execution result information of the target device. Alternatively, the method includes: receiving a visit message from a second node, and performing a corresponding operation according to the visit message; and sending execution result information to the second node.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may also include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are merely embodiments of the present application and are not intended to limit the scope of the present application.

It is to be understood by those skilled in the art that the term "user terminal" encompasses any suitable type of wireless user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of some embodiments of the present application is provided above through illustrative and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A communication method, comprising:
determining a target device according to a trigger message from a first node;
sending a visit message to the target device, wherein the visit message is used for instructing the target device to perform a corresponding operation; and
sending execution result information of the target device to the first node.

2. The method of claim 1, wherein the trigger message comprises at least one of the following information about at least one device:
a complete identifier or a partial identifier of the device; all or part of data stored in the device; a change instruction for a selected flag or an inventory flag; a selection message of the device; capability information of the device; auxiliary information of the device; an operation type; operation content; a password; an operation message; a connection request; resource information for transmitting data; connection information; or bearer information.

3. The method of claim 1, after determining the target device according to the trigger message from the first node, further comprising:
sending information about the target device to the first node;
wherein the information about the target device comprises at least one of:
a complete identifier or a partial identifier of the target device; all or part of data stored in the target device; a random code corresponding to the target device; an instruction of an access result of the target device; capability information of the target device; auxiliary information of the target device; a feedback message of the target device; a connection request for the target device; or resource information for transmitting data.

4. The method of claim 1, before sending the visit message to the target device, further comprising:
receiving a visit instruction message from the first node, wherein the visit instruction message is used for instructing an operation performed on the target device;
wherein the visit instruction message comprises at least one of the following information about the target device:
a complete identifier or a partial identifier of the target device; a random code corresponding to the target device; an operation type; operation content; a password; an operation message; a connection request for the target device; resource information for transmitting data; capability information of the target device; auxiliary information of the target device; connection information of the target device; or bearer information of the target device.

5. The method of claim 1, wherein the execution result information comprises at least one of:
a complete identifier or a partial identifier of the target device; all or part of data stored in the target device; a random code corresponding to the target device; an instruction of an access result of the target device; auxiliary information of the target device; a feedback message of the target device; an operation type; an execution result; read content; a connection request for the target device; resource information for transmitting data; or an application layer data packet.

6. The method of claim 1, wherein the target device is in one of the following states:
an idle state in which the target device does not support a data transmission;
an access state in which the target device supports an access operation and does not support a visit operation;
a connected state in which the target device supports a visit operation;
an inactive state in which the target device does not operate; or
a silent state in which the target device enters a power saving mode.

7. The method of claim 1, wherein determining the target device according to the trigger message from the first node comprises:
sending a selection message and a query message to at least one device according to the trigger message;
receiving anti-collision information fed back by the at least one device;
sending an acknowledgement message to the at least one device that feeds back the anti-collision information; and
receiving report information, wherein the at least one device that feeds back the anti-collision information sends the report information according to the acknowledgement message, and determining the at least one device that sends the report information to be the target device.

8. The method of claim 1, before sending the visit message to the target device, further comprising:
sending a request message to the target device, wherein the request message is used for instructing the target device to generate a random number; and
receiving the random number returned by the target device.

9. The method of claim 1, wherein the visit message comprises instruction information of at least one of a read operation; a write operation; an inactivation operation; a lock operation; a visit operation; a block write operation; or a block erase operation.

10. The method of claim 1, before sending the visit message to the target device, further comprising:
waking up a third node according to a wake-up message from the first node;
receiving a connection setup request from the third node, and sending a connection setup request to the first node; and
setting up a connection with the third node according to a connection instruction message from the first node.

11. The method of claim 10, wherein the wake-up message comprises at least one of:
an identifier of the third node; a type of the third node; a wake-up cause; capability information of the third node; auxiliary information of the third node; or an application layer data packet.

12. The method of claim 10, wherein the connection setup request comprises at least one of:
an identifier of the third node; a type of the third node; a wake-up cause; information about devices supported or stored by the third node; a resource for transmitting data; or an application layer data packet.

13. A communication method, comprising:
sending a trigger message for instructing a second node to determine a target device; and
receiving execution result information of the target device.

14. The method of claim 13, further comprising:
receiving information about the target device, wherein the information about the target device comprises at least one of:
a complete identifier or a partial identifier of the target device; all or part of data stored in the target device; a random code corresponding to the target device; an instruction of an access result of the target device; capability information of the target device; auxiliary information of the target device; a feedback message of the target device; a connection request for the target device; or resource information for transmitting data.

15. The method of claim 13, further comprising:
sending a visit instruction message for instructing an operation performed on the target device;
wherein the visit instruction message comprises at least one of the following information about the target device:
a complete identifier or a partial identifier of the target device; a random code corresponding to the target device; an operation type; operation content; a password; an operation message; a connection request for the target device; resource information for transmitting data; capability information of the target device; auxiliary information of the target device; connection information of the target device; or bearer information of the target device.

16. The method of claim 13, further comprising:
sending a wake-up message for instructing the second node to wake up a third node;
receiving a connection setup request from the second node; and
sending a connection instruction message to the second node, wherein the connection instruction message is used for instructing the second node to set up a connection with the third node.

17. A communication method, comprising:
receiving a visit message from a second node, and performing a corresponding operation according to the visit message; and
sending execution result information to the second node.

18. The method of claim 17, wherein a target device is in one of the following states:
an idle state in which the target device does not support a data transmission;
an access state in which the target device supports an access operation and does not support a visit operation;
a connected state in which the target device supports a visit operation;
an inactive state in which the target device does not operate; or
a silent state in which the target device enters a power saving mode.

19. The method of claim 18, wherein the target device switches from the idle state to the silent state in a case where a first condition is satisfied;
wherein the first condition comprises at least one of the following:
a duration for which the target device is in the idle state reaches a first set time;
a number of times configurations are received in the idle state reaches a first number of times; or
an instruction to switch to the silent state is received.

20. The method of claim 18, wherein the target device switches from the silent state to the idle state in a case where a second condition is satisfied;
wherein the second condition comprises at least one of the following:
a duration for which the target device is in the silent state reaches a second set time;
a number of times configurations are received in the silent state reaches a second number of times;
a set signal or a set message is detected;
no set signal or no set message is detected;
signal energy is detected to be lower than an energy threshold; or
reference signal received power, RSRP, is detected to be lower than a power threshold.

21. The method of claim 18, wherein the target device switches from the idle state to the access state in a case where a third condition is satisfied;
wherein the third condition comprises at least one of the following:
an excitation signal or a wake-up signal is received;
a selection message is received, and a condition in the selection message is satisfied;
a query message is received, and a condition in the query message is satisfied;
an access request message is received, and a condition in the access request message is satisfied; or
a condition for entering an arbitrate, reply, or acknowledged state is satisfied.

22. The method of claim 18, wherein the target device switches from the access state to the idle state in a case where a fourth condition is satisfied;
wherein the fourth condition comprises at least one of the following:
an error occurs;
no excitation signal or no wake-up signal is received within a set time period; or
an access fails.

23. The method of claim 18, wherein the target device switches from the access state to the connected state in a case where a fifth condition is satisfied;
wherein the fifth condition comprises at least one of the following:
the target device has been determined by the second node;
identifier information has been reported;
anti-collision information has been reported;
a condition for entering an open or secured state is satisfied;
the visit message is received;
a dedicated bearer or a transmission format has been configured; or
a corresponding connection has been set up.

24. The method of claim 18, wherein the target device switches from the connected state to the idle state in a case where a sixth condition is satisfied;
wherein the sixth condition comprises at least one of the following:
an error occurs;
no excitation signal or no wake-up signal is received within a set time period; or
energy fails to be sensed within a set time period.

25. The method of claim 18, wherein the target device switches from the connected state to the inactive state in a case where a seventh condition is satisfied;
wherein the seventh condition comprises that an inactivation instruction message is received, and a condition in the inactivation instruction message is satisfied.

26. The method of claim 18, wherein the target device performs state switching in at least one of the following manners:
the target device enters the silent state after a first time threshold and enters the idle state after a second time threshold in the silent state;
a count is increased by one each time instruction information to enter the silent state is received, and the target device enters the silent state in a case where the count is greater than or equal to a count threshold and enters the idle state after a third time threshold in the silent state;
a count is generated and decreased by one each time instruction information to enter the silent state is received, and the target device enters the silent state in a case where the count is equal to 0 and enters the idle state after a fourth time threshold in the silent state;
the target device enters the silent state in response to receiving instruction information to enter the silent state and enters the idle state after a fifth time threshold in the silent state; or
the target device enters the silent state in response to detecting, within a sixth time threshold, that signal energy or signal received power is lower than a set threshold and enters the idle state after a seventh time threshold in the silent state.

27. A node, comprising a memory, a processor, and a computer program stored in the memory and executable by the processor, wherein the processor executes the computer program to perform the communication method of any one of claims 1 to 12 or the communication method of any one of claims 13 to 16.

28. A device, comprising a memory, a processor, and a computer program stored in the memory and executable by the processor, wherein the processor executes the computer program to perform the communication method of any one of claims 17 to 26.

29. A computer-readable storage medium, which is configured to store a computer program which, when executed by a processor, causes the processor to perform the communication method of any one of claims 1 to 26.
